# FASCICULE DE BREVET EUROPEEN

(11) **EP 1 552 351 B1**
(45) Date de publication et mention de la délivrance du brevet: **05.01.2011**
(21) Numéro de dépôt: 03750807.4
(22) Date de dépôt: 15.07.2003
(51) Int. Cl.: G05B 19/4099

(54) **PIECE MECANIQUE AVEC AU MOINS UN CIRCUIT DE TRANSPORT DE FLUIDE ET SON PROCEDE DE CONCEPTION PAR STRATES**
MECHANISCHES TEIL MIT MINDESTENS EINEM FLUIDTRANSPORTKREIS, VERFAHREN ZUM MEHRLAGIGEN ENTWURF DESSELBEN
MECHANICAL COMPONENT HAVING AT LEAST ONE FLUID TRANSPORT CIRCUIT AND METHOD FOR DESIGNING SAME IN STRATA

(30) Priorité: 07.10.2002 FR 0212389
(43) Date de publication de la demande: 13.07.2005
(73) Titulaire: Cirtes Src SA Cooperative d'Ues, 88100 Saint-Die-des-Vosges (FR)
(72) Inventeur: BARLIER, Claude, F-88100 Coinches (FR); PELAINGRE, Cyril, 88650 Mandray (FR); CUNIN, Denis, F-88600 Les Poulières (FR); LEVAILLANT, Christophe, F-81000 Albi (FR)
(74) Mandataire: Poupon, Michel
(86) Numéro de dépôt international: PCT/FR2003/002224
(87) Numéro de publication internationale: WO 2004/034165

(56) Documents cités:
- EP-A- 0 585 502
- WO-A-99/00234
- US-A- 5 812 402
- HIMMER T ET AL: "Lamination of metal sheets" COMPUTERS IN INDUSTRY, ELSEVIER SCIENCE PUBLISHERS. AMSTERDAM, NL, vol. 39, no. 1, juin 1999 (1999-06), pages 27-33, XP004164326 ISSN: 0166-3615

## Description

L'invention concerne une pièce mécanique comportant au moins un circuit destiné à contenir un fluide et un procédé pour réaliser ladite pièce.

L'invention voit des applications dans des domaines très divers comme par exemple en mécanique (par exemple pour la fabrication de culasses), en imprimerie (pour la réalisation de circuit d'encre de marquage) ou autres.

L'invention voit une application préférée mais non limitative au domaine de la plasturgie et plus particulièrement aux problèmes posés par la régulation thermique des outils (matrices ou poinçon) de moulage.

La régulation thermique d'un outil d'injection a pour fonction d'évacuer vers l'extérieur de l'outil l'énergie calorifique apportée par le thermoplastique fondu. Cette énergie lui avait été cédée par la vis de plastification afin de rendre le thermoplastique conformable à l'empreinte. Cette énergie doit maintenant lui être retirée afin que la pièce puisse être éjectée « sans déformations » de l'empreinte moulante. Cette évacuation se fait suivant des conditions définies au préalable lors de la conception de la pièce et de l'outillage.

La solution la plus utilisée dans l'art antérieur pour réaliser la fonction de refroidissement et de régulation des outils de moulage consiste à réaliser dans la partie massive de l'outil une série de canaux dans lesquels circule un fluide caloporteur dont la nature dépend de la température moyenne souhaitée dans l'outil.

Pour obtenir des canaux de régulation idéalement efficaces, il faudrait qu'ils puissent former une nappe en regard de la pièce ou en suivant exactement sa forme et qu'ils soient séparés de cette pièce par une paroi la plus fine possible. Bien entendu, cette solution n'est pas réalisable pour des raisons techniques, et en raison des importantes contraintes mécaniques engendrées par le procédé d'injection.

Une solution approchée est parfois obtenue par un système de canaux de section carrée suivant approximativement la forme de la pièce. Cette solution est utilisée sur des cas particuliers et on ne sait l'utiliser que sur des formes géométriques simples (principalement sur des poinçons cylindriques), et elle pose un problème d'étanchéité entre les pièces rapportées engendrant des délais et des coûts de fabrication importants.

La réalisation de ces canaux par perçage est la solution la plus utilisée, c'est la moins efficace mais la plus simple. Les trous ne pouvant être percés qu'en ligne droite, toute une série de perçages est nécessaire pour suivre au mieux l'empreinte. Le circuit est alors formé par l'utilisation de bouchons étanches voire par l'utilisation de pontages extérieurs pour les cas difficiles, mais ceux-ci sont à éviter le plus possible en raison de leurs risques d'écrasement ou de rupture lors de la manutention du moule.

Un refroidissement déficient peut engendrer soit des problèmes de précision géométrique, soit des temps de cycles trop longs. Dans le pire des cas, il peut être la cause d'arrêts de production pendant lesquels le moule est laissé ouvert afin qu'il se régule par convection naturelle. Malgré tous ces risques de dysfonctionnement, cette fonction de l'outil est encore souvent négligée lors de la conception des moules d'injection. Le système de régulation est le plus souvent conçu en dernier et doit se placer entre les divers éjecteurs, colonne de guidage etc. Ce qui représente une erreur, cette fonction étant la clé de voûte du procédé d'injection, car les conditions de refroidissement de la pièce jouent un rôle essentiel sur le niveau de contraintes internes des pièces injectées, ainsi que sur la cristallinité du polymère et donc sur sa stabilité au vieillissement et ses propriétés mécaniques.

Par conséquent, la réalisation des canaux de refroidissement/régulation représentent actuellement un enjeu important dans la recherche de performances en plasturgie.

Une solution a été proposée dans un article de la revue Emballages Magazine (janvier-février 2002, supplément n° 605.- « Comment optimiser le moulage des plastiques ».

Cette solution se propose de réaliser un premier moule prototype puis à observer et enregistrer son comportement lors d'un refroidissement. Un ordinateur analyse ensuite les données et en déduit les dimensions et emplacements de picots destinés à améliorer les échanges thermiques. Ce procédé conduit à la construction d'un deuxième moule plus performant que le premier comportant un ensemble de picots selon un plan établi par ordinateur.

Cette solution est onéreuse et nécessite une expérimentation préalable.

Une autre solution proposée dans la demande de brevet WO 02/22341 consiste pour augmenter les échanges thermiques à placer à l'intérieur d'une paraison, un insert tubulaire équipé de picots disposés radialement. L'application de cette solution est limitée et complexe à mettre en oeuvre.

Le but de la présente invention est de pallier les inconvénients précités de l'art antérieur et de proposer au concepteur d'un outil d'injection, un procédé entièrement nouveau pour concevoir, calculer, et fabriquer l'outil et son circuit de transport de fluide de façon entièrement optimisée en fonction des besoins de la pièce à produire, au moyen du procédé de STRATOCONCEPTION ®.

A: < L'art antérieur cite également les documents D1 : HIMMER T ET AL: « Lamination of metal sheets » - D2 : WO 01/02160 A ;

Le document D1 enseigne de réaliser indépendamment la stratification d'un moule et la découpe d'un canal dans une strate, au contraire de l'invention qui enseigne de réaliser la découpe de chambres élémentaires, ou parties d'un canal ou d'une nappe, en même temps que l'on réalise la strate correspondante.

Le document D2 propose une solution de réalisation de chambres ouvertes sur une face arrière du moule, solution guidée par l'utilisation d'une technologie de dépôt de poudre, technique nécessitant la création et l'emploi de support afin de pouvoir réaliser des formes creuses, problème que ne rencontre pas le procédé selon l'invention.>

Ce but est atteint par l'invention qui consiste en un procédé de réalisation d'une pièce mécanique à partir d'une conception assistée par ordinateur du type comportant les phases de :
- décomposition préalable de la partie massive de la pièce en strates élémentaires,
- fabrication des strates élémentaires,
- reconstitution de la pièce dans son intégralité par superposition et assemblage des strates.
caractérisé en ce que
- on intègre, lors de la décomposition de la pièce, la décomposition en chambres élémentaires suivant une décomposition liée à celle de la pièce d'au moins un circuit de transport de fluide préalablement calculé et modélisé on réalise lesdites chambres élémentaires dans les strates élémentaires de la pièce, lors de l'étape de fabrication des strates,
- on reconstitue le circuit de transport de fluide dans son intégralité lors de la superposition et de l'assemblage des strates

En variante,
- on intègre en outre lors de la décomposition de la pièce, la décomposition d'un circuit supplémentaire d'isolation en chambres d'isolation élémentaires suivant une décomposition liée à celle de la pièce,
- on réalise lesdites chambres élémentaires d'isolation dans les strates élémentaires de la pièce, lors de l'étape de fabrication des strates,
- on reconstitue le circuit d'isolation lors de la superposition et de l'assemblage de l'ensemble des strates.

L'invention concerne également une pièce mécanique du type comportant une partie massive avec au moins un circuit de transport de fluide par exemple composé de canaux réalisé dans la partie massive et à une distance prédéterminée de la surface d'échange thermique, le circuit étant réalisé par des procédés ci-dessus et en ce que le circuit est reconstitué dans son entier lors de l'assemblage des strates, à partir d'une succession de chambres élémentaires mises en communication de façon étanche et prévues dans une partie au moins des strates concernées.

Selon certaines variantes, le circuit, après reconstitution, forme dans la partie massive de la pièce, un ensemble de canaux, préférentiellement parallèles, suivant ou copiant une surface de moulage à une distance prédéterminée de celle-ci.

Selon d'autres variantes le circuit, après reconstitution, forme dans la partie massive de la pièce, une chambre en forme de nappe.

Préférentiellement, le circuit comporte des moyens de raccordement à un dispositif de régulation

Selon un variante, la pièce comporte en outre un circuit supplémentaire isolant également reconstitué dans son entier lors de l'assemblage des strates, à partir d'une succession de chambres élémentaires mises en communication étanche et prévues dans une partie au moins des strates.

Préférentiellement, le circuit de transport de fluide est rempli d'un fluide choisi dans l'ensemble (fluide pour échange thermique, fluide pour isolation thermique, matériau liquide ou pulvérulent, fluide de marquage).

On comprendra mieux l'invention à l'aide de la description ci-après faite en référence aux figures annexées suivantes:
- figure 1 : vue en trois dimensions d'un moule de l'art antérieur avec canaux de refroidissement,
- figure 1a: section verticale du moule de la figure 1a,
- figures 2a et 2b : principe de décomposition du moule de la figure 1a en cellules unitaires,
- figure 3 : vue en trois dimensions d'un moule stratifié selon l'invention et comportant des canaux à axes suiveurs pour la circulation de fluide de régulation suivant la forme de la surface de moulage,
- figure 3a, 3b : section verticale d'un moule de la figure 3 et sa décomposition en cellules unitaires,
- figure 4 : vue en trois dimensions d'un moule stratifié selon l'invention et comportant des canaux à surface suiveuse pour la circulation de fluide,
- figure 4a, 4b : section verticale d'un moule de la figure 4 et sa décomposition en cellules unitaires,
- figure 5 : vue en trois dimensions d'un moule stratifié selon l'invention comportant une nappe suiveuse pour la circulation du fluide de régulation suivant ou copiant la forme de la surface de moulage, figure 5a section verticale du moule de la figure 5,
- figure 6 : représentation non limitative d'une nappe suiveuse selon l'invention,
- figures 7a, 7b : représentation de deux strates successives délimitant la nappe suiveuse de la figure précédente,
- figure 8 : représentation partielle d'une strate comportant des ailettes produisant un effet laminaire dans la nappe suiveuse, cet exemple étant non limitatif,
- figure 9 : représentation partielle d'une strate comportant des ailettes produisant un effet turbulent dans la nappe suiveuse, cet exemple étant non limitatif,
- figure 10 : cellule thermique unitaire d'une nappe suiveuse de régulation,
- figure 11 : section schématique d'un moule stratifié selon l'invention comportant des canaux suiveurs isolants,
- figure 12 : section schématique d'un moule stratifié selon l'invention comportant une nappe suiveuse isolante,
- figure 13 : schéma d'une méthode de remplissage des canaux ou nappe isolant,
- figure 14: schéma d'un dispositif de régulation dynamique selon l'invention.

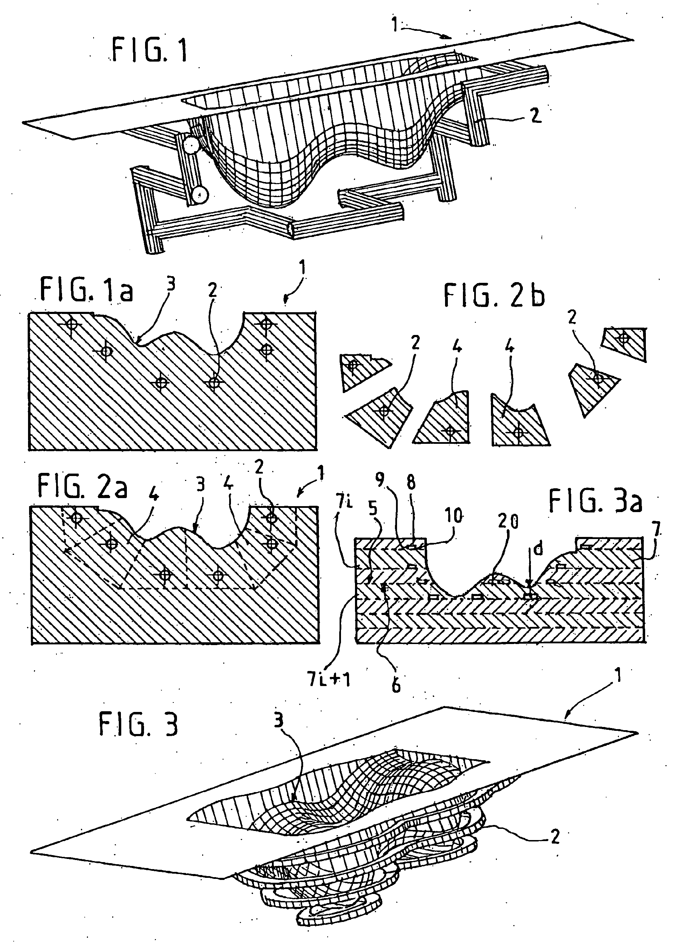

On se rapporte d'abord à la figure 1 présentant le principe de refroidissement classique d'un moule (1). Plusieurs canaux de régulation (2) sont réalisés par perçage et/ou utilisation des bouchons, parallèlement à la surface (3) de moulage du moule (1), postérieurement à la fabrication de l'outil de moulage, et à des emplacements définis généralement empiriquement par le concepteur du moule.

Les figures 2a et 2b schématisent l'idée inventive de base qui a consisté, afin de faciliter les espacements et les dimensionnements des canaux, à décomposer en cellules élémentaires (4) sur une épaisseur donnée la région du moule environnant la surface de moulage (3) qui sera en contact avec le matériau à mouler et qui par conséquent subira les contraintes d'échauffement et de refroidissement au cours de l'élaboration de la pièce.

Plus précisément, les figures 2a et 2b schématisent une décomposition en cellule thermique unitaire appliquée à un cas de l'art antérieur afin de simplifier et de faciliter la compréhension du lecteur. Cette décomposition est un des moyens permettant et facilitant le dimensionnement des canaux.

Selon l'idée inventive, chaque cellule est déterminée de manière à être traversée par au plus un canal de régulation, les emplacements et les dimensionnements des canaux étant calculés ensuite en fonction des contraintes thermiques que devra subir cette zone du moule lors des différentes opérations de réalisation de la pièce (moulage, soufflage, refroidissement, démoulage,...).

L'idée inventive de base a constitué à concevoir et réaliser par le procédé de STRATOCONCEPTION ® des canaux de régulation optimisés. La conception desdits canaux provient d'une modélisation préalable mais non limitative en cellules thermiques unitaires.

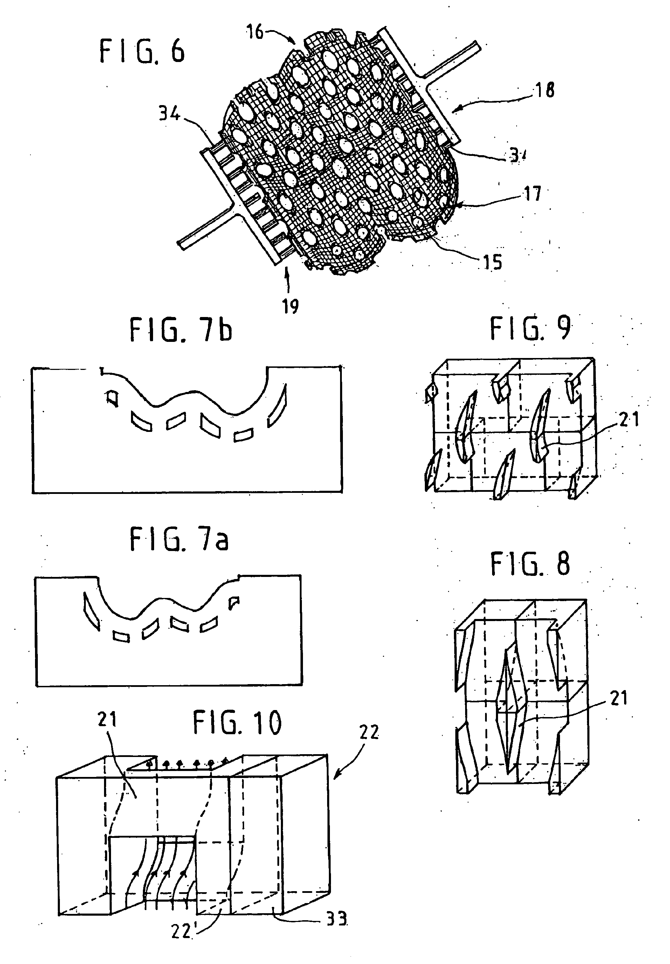

Une cellule unitaire (22) (voir figure 10) est formée sur une épaisseur donnée d'une partie du moule (22') en contact sur une de ses faces avec le polymère à refroidir, d'une partie de ce polymère (33), ainsi que d'une chambre unitaire (15) dans laquelle circule le fluide.

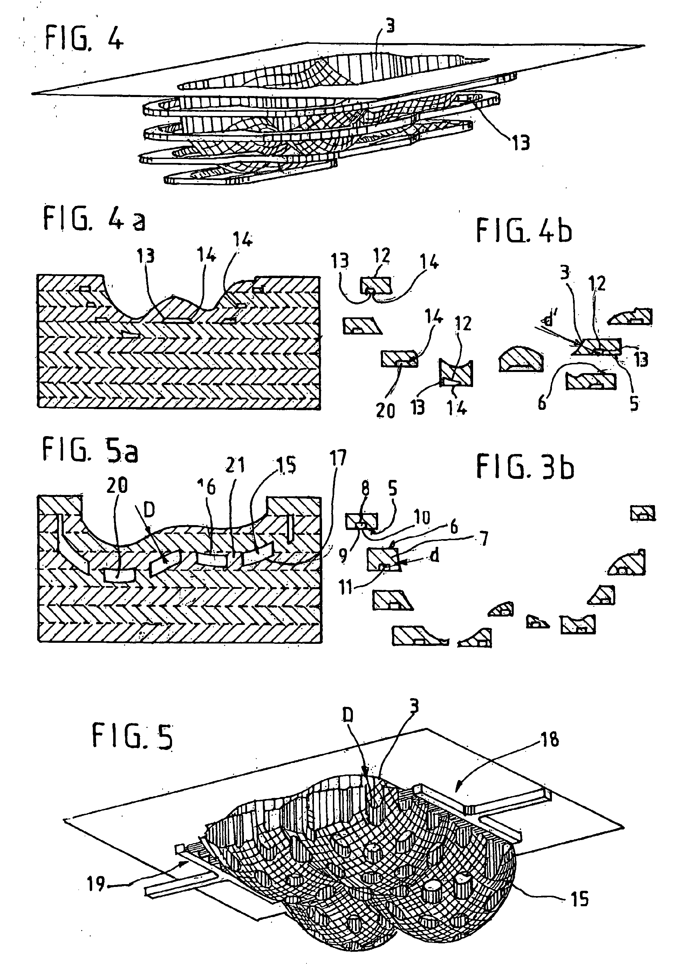

Les figures 3, 3a, 3b, montrent une première variante de l'application du principe de base à un moule stratifié, réalisé par le procédé de STRATOCONCEPTION (marque déposée) ou par l'un de ses perfectionnements cités en introduction.

Selon ce procédé le moule (1) est réalisé en mettant en oeuvre un logiciel décomposant ledit moule en strates élémentaires (7), puis en réalisant les strates par micro fraisage dans une plaque, les strates étant ensuite assemblées entre elles par superposition, de manière que l'un des plans inter-strate (7ᵢ) soit appliqué contre l'un des plans inter-strate de la strate suivante (7ᵢ + 1).

Pour l'application du principe de l'invention :
- chaque strate de la zone du moule concernée par les échanges thermiques est calculée de manière à comporter un canal de régulation (2) débouchant dans l'un des plans inter-strate, soit le plan supérieur d'une strate, soit le plan inférieur,
- les canaux sont dimensionnés ou calculés préalablement en fonction des besoins de l'application, et sont réalisés par micro-fraisage lors de l'étape de réalisation des strates puis sont reconstitués dans leur entier lors de l'assemblage des strates.

Ce sont donc les besoins de la pièce par exemple : temps de cycle, caractéristiques du matériau etc... qui dictent les dimensionnements des canaux.

Pour faciliter la découpe par micro-fraisage, laser ou jet d'eau du canal (2) dans une strate (7) de la série (7ᵢ, avec i de 1 à n) et parce qu'une section à base carrée ou rectangulaire facilite les échanges thermiques par rapport à une section circulaire, on prévoit pour la variante de mise en oeuvre des figures 3a et 3b, au moins un canal (2) à section carrée dans la ou les strates (7) de la zone concernée du moule avec un fond plan (8) parallèle au plan inter-strate, deux parois latérales (9, 10) perpendiculaires au plan inter-strate (5 ou 6) dans lequel débouche ledit canal (2). Cette variante de mise en oeuvre est dite « à axe suiveur » car l'axe longitudinal (11) du canal est situé à une distance (d) prédéterminée de la surface de moulage (3).

Selon la variante de mise en oeuvre des figures (4, 4a, 4b) on prévoit un canal (2) dont l'une au moins des parois latérales (13, 14) est conformée de façon à reproduire ou copier une partie de la surface de moulage (3) (cette variante est dite à surface suiveuse), c'est-à-dire que tous les points de ladite paroi latérale suiveuse (par exemple la paroi (14) ) sont situés à distance (d') de la surface de moulage (3), le fond (12) et l'autre paroi latérale (13) restant respectivement parallèle et éventuellement perpendiculaire au plan inter-strate (5 ou 6).

Pour ces variantes de réalisation des figures 3a à 4b les canaux sont réalisés en retournement de strates et ont une profondeur inférieure à l'épaisseur d'une strate. Bien entendu ces variantes sont des exemples non limitatifs et les canaux peuvent présenter d'autres formes et une profondeur supérieure à l'épaisseur d'une strate.

Les angles entre les parois et le fond sont « cassés » de manière à limiter les concentrations de contraintes.

Les canaux suivent la surface de moulage à une profondeur prédéterminée (d') constante ou variable selon la zone à refroidir ou les exigences du refroidissement.

L'emplacement d'un canal sur le plan interface d'une strate (7ᵢ) est calculé pour que, lors de l'empilement des strates (7ᵢ) ledit canal soit obturé par le plan interface de la strate suivante (7_{i +1}) sans qu'il y ait jamais recouvrement de deux canaux débouchants.

La taille et la section des canaux est calculée en fonction de la quantité de chaleur à évacuer.

Selon une autre variante de mise en oeuvre du principe de l'invention représentée en figures 5 et 6, le moule (1) comporte une nappe de circulation de fluide (15) suivant, ou copiant la forme de la surface de moulage.

Cette nappe suiveuse a une épaisseur prédéterminée et elle est délimitée par une surface (16) tournée vers la surface de moulage (3) et une surface (17) tournée vers l'extérieur du moule. La nappe suiveuse est prédéterminée de manière que tous les points de la surface (16) tournée vers la surface de moulage soient à distance ou profondeur prédéterminée (D) de ladite surface de moulage (3), pour cette raison cette nappe de circulation a été appelée nappe suiveuse. Cette distance (D) est constante ou variable selon la zone à refroidir ou les contraintes thermiques. Cette nappe de fluide constitue un véritable bouclier thermique continu enveloppant la pièce à réaliser.

Un exemple de nappe suiveuse (15) a été matérialisé par un fluide solidifié puis représenté isolément à la figure 6 avec sa nourrice (18) pour l'arrivée du fluide de régulation et son collecteur de sortie de fluide (19).

Comme dans l'exemple précédent de mise en oeuvre, le moule est réalisé par un procédé de STRATOCONCEPTION et dans chaque strate concernée par l'échange thermique une partie du circuit appelée chambre élémentaire (20) est réalisée pendant l'étape de micro fraisage, puis le circuit est constitué dans son ensemble après superposition de toutes les strates.

Les deux strates (7ᵢ) et (7ᵢ+₁) du moule enveloppant ou délimitant la chambre où circule le fluide de la nappe suiveuse de la figure 6 ont été représentée en figure 7a et 7 b.

Cette nappe de fluide constitue un véritable bouclier thermique continu enveloppant la pièce à réaliser.

On prévoit également de casser les angles entre les faces et le fond de la chambre de manière à limiter les concentrations de contraintes et les pertes de charges.

En outre, à l'intérieur de la chambre, on prévoit une multiplicité d'ailettes (21) transversales assurant un renfort mécanique entre deux parois ainsi qu'un brassage du fluide.

Les ailettes peuvent présenter des formes diverses selon les applications et les effets recherchés par exemple un effet laminaire figure 8 ou un effet turbulent figure 9.

La taille, la forme, la section des ailettes sont fonction de la quantité de chaleur à évacuer et des nécessités dues aux contraintes mécaniques par exemple : rayon de raccordement entre les ailettes et les faces de la nappe, etc...

Selon l'invention la nappe suiveuse (15) est décomposable en cellules unitaires d'échange thermique (22) à des fins de modélisation mathématique de l'ensemble des échanges thermiques subits ou transmis par le moule au cours de la réalisation d'une pièce.

Une cellule unitaire d'échange (22) est représentée individuellement en figure (10) et schématisée sur l'une des strates (7ᵢ + ₁) de la figure (7b).

Les différents paramètres caractéristiques de cette cellule virtuelle de base (22) permettent, conformément à l'invention, de calculer mathématiquement de façon optimale les dimensionnements de la pièce et du circuit avant leur réalisation, par écriture, à portée de l'homme du métier, de bilans thermiques, grâce à des modèles analytiques et/ou des simulations numériques multiphysiques.

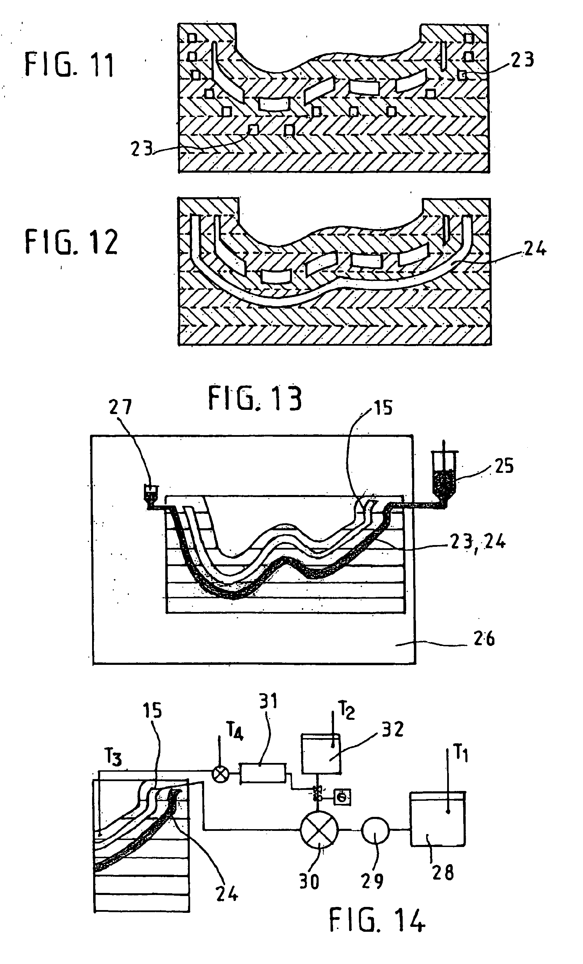

Selon encore deux autres modes de mise en oeuvre, et représentés en figure 11 et 12, et pour limiter les conductions thermiques vers les côtés (pertes par convection avec l'extérieur) et/ou vers le fond (pertes par conduction avec les bâtis machines) du moule, ledit moule comporte respectivement une pluralité de canaux suiveurs isolants (23) (figure 11) et parallèles entre eux ou une nappe suiveuse isolante (24) (figure 12) également réalisés pendant l'étape de micro fraisage de la STRATOCONCEPTION et conçus de la même façon que les canaux suiveurs de régulation (2) ou que la nappe suiveuse de régulation (15).

Les canaux isolants (23) et la nappe isolante (24) sont situés à distance constante ou variable de la nappe suiveuse de régulation (15) et extérieurement à celle-ci c'est à dire entre la nappe suiveuse (15) et l'extérieur du moule (faces latérales et fond).

Les dimensions et les sections des canaux et nappe isolants (23, 24) sont fonction de l'isolement à fournir et sont également issus des simulations numériques multiphysiques. Par exemple ils sont plus épais lorsqu'ils sont proches des plateaux de presse que lorsqu'ils sont près des faces extérieures car les pertes par conduction dans les plateaux sont plus importants que celles par convection naturelle pour les faces extérieures.

Les canaux et nappes isolants forment soit une régulation secondaire ou isolation active, soit une isolation inerte s'ils sont remplis d'un matériau isolant.

La figure (13) schématise une méthode de remplissage par une résine isolante (25) dans une enceinte sous vide (26) pour une isolation passive.

Un volume de résine (25) supérieur de quelques pour cent (en raison du retrait) au volume interne des canaux ou de la nappe à remplir est introduit sous vide d'air dans ledit volume interne. Un témoin (27) permet de s'assurer du remplissage complet.

La figure (14) montre un exemple de dispositif de régulation thermique active du fluide de régulation circulant dans une nappe suiveuse (15) isolée extérieurement par une nappe isolante (24).

Le fluide de refroidissement (28) à température (T₁) est envoyé par une pompe (29) dans la chambre (20) de la nappe suiveuse (15). Une électro vanne (30) commandée par un régulateur (31) mélange si nécessaire un liquide plus froid (32) à température (T₂) au liquide de refroidissement (28) en fonction de l'écart mesuré entre une température (T₃) mesurée dans la zone du moule comprise entre la surface de moulage (3) et la température (T₄) de référence choisie pour la régulation.

Par ailleurs pour obtenir un outil de moulage apte à supporter les contraintes mécaniques, on prévoit de réaliser lors du collage des strates une ceinture mécanique une application de colle mécanique sur les zones s'étendant depuis les canaux jusqu'à l'extérieur du moule, et une application de colle à conductivité thermique prédéterminée sur les zones s'étendant depuis les circuits de refroidissement et jusqu'à la surface de moulage. Par circuit de refroidissement on désigne aussi bien le réseau de canaux que la réalisation en nappe.

D'une manière générale, le procédé assure un maintient des strates adapté techniquement et économiquement, pour l'application visée, parle choix de la technique d'assemblage des strates à savoir, collage, brasage, vissage ou autre...

Un procédé selon l'invention permet d'asservir la régulation des outillages aux besoins des pièces à produire en permettant une régulation très fine pour les pièces techniques ou bien une régulation vive pour les pièces de grande consommation. Nous allons ainsi :
■ optimiser la régulation des outillages,
■ améliorer la productivité des outillages,
■ optimiser la tenue mécanique des pièces produites,
■ diminuer leur déformation géométriques,
■ diminuer leurs contraintes internes dues au refroidissement,
■ diminuer leurs contraintes internes dues au remplissage,
■ diminuer l'inertie thermique des outillages,
■ diminuer leur poids.

En outre :
On peut réaliser des massifs ou bruts (ébauchés ou non) dédiés à une pièce avec le système optimisé de canaux déjà réalisés.

Chaque strate est vu comme un solide indépendant ainsi on ne s'occupe que de la chaleur qui lui est apportée et le canal est ainsi dimensionné.

Les points chauds peuvent donc être traités avec le plus grand soin.

Le déséquilibre du refroidissement, dû aux conditions de contact moule/matière et/ou à des difficultés d'accès entre la matrice et le poinçon peut être annulé.

En tout point de l'empreinte, l'évacuation de la chaleur est optimisée.

On peut obtenir un refroidissement homogène (en flux, en température, en coefficient de transfert de chaleur) sur toute la surface de la pièce tout en assurant un temps de refroidissement ajusté au plus court, ou un temps de refroidissement minimum en limitant malgré toutes les contraintes résiduelles et les déformations dans la pièce.

On peut, grâce à la faible inertie du moule, réaliser un pilotage dynamique du refroidissement. Ainsi, on peut chauffer le moule après éjection de la pièce, le maintenir chaud jusqu'à la fin du remplissage et ensuite le refroidir. On commence à le refroidir un peu avant la fin du remplissage et ceci en fonction du temps de réaction de l'outillage lui-même (très court grâce à l'inertie réduite de tels outillages).

En améliorant le remplissage, on diminue sa durée en facilitant l'écoulement du polymère et on obtient également une diminution du niveau de contraintes internes de la pièce injectée.

La combinaison d'un refroidissement optimisé avec une gestion dynamique de la régulation thermique du moule permet de diminuer le temps de cycle en diminuant la durée du remplissage et celle du refroidissement.

Cette combinaison permet également de réduire considérablement les contraintes internes des pièces injectées, cela diminue leur déformation, leur post-retrait, augmente leur qualité dimensionnelle et améliore leur vieillissement.

Quelque soit le type de refroidissement souhaité, on améliore les qualités dimensionnelles, structurales et mécaniques des pièces injectées qu'elles soient techniques, esthétiques ou encore de grande consommation.

Le transfert thermique est optimisé par la modélisation en cellules : des abaques et des moyens de simulations permettant de choisir chaque paramètre de la régulation.

Le placement des ailettes ainsi que leurs dimensions influencent le transfert thermique la tenue mécanique des outillages, la gestion des turbulences (pertes de charges,...). Ce placement doit donc être étudié et optimisé grâce à des outils de stimulation numérique et d'optimisation.

La conception des nourrices (18) et collecteurs (19) est un point important pour la gestion des flux de fluide de régulation. Cette conception est également simulée et optimisée numériquement (par exemple en prévoyant des tubulures (34) plus larges ou plus nombreuses aux endroits nécessaires) (voir figure 6).

Le temps de mise en service (mise en température) des outillages est réduit.

Leur poids est également réduit.

Le moule possède une faible inertie thermique. Ceci est dû à une optimisation thermique et mécanique de l'épaisseur de la paroi entre la nappe suiveuse et la surface moulante et peut également être renforcée par l'action isolante de la seconde nappe si besoin est. Le volume à réguler est ainsi optimal.

Cette inertie minimale donne aux outillages une plus grande capacité de production. En effet non seulement le temps de régulation est optimisé mais l'outillage retrouve plus rapidement ses conditions initiales pour débuter un nouveau cycle.

Bien entendu, les exemples et/ou applications décrits ci-dessus ne sont pas limitatifs de l'invention.

En particulier, l'invention s'étend à de nombreux autres domaines d'application connus celui de la fonderie des métaux, le bâtiment, l'imprimerie ou autres...

En effet, selon le besoin, le fluide choisi peut être un liquide, un gaz, ou une poudre et peut être utilisé par exemple en vue d'échanges thermiques, d'isolation, de marquage, de colmatage et/ou assemblage et/ou rigidification par solidification (ou autres...)

Par ailleurs, par souci de simplification et de clarté on a présenté une décomposition selon des plans parallèles mais elle n'est nullement limitative et peut être réalisée également selon des surfaces gauches.

Egalement, il est précisé que la décomposition du ou des circuits est liée à celle de la pièce en ce sens qu'elle peut être identique ou liée par une relation mathématique.

Enfin, le terme de cellule peut avoir été utilisé dans le texte avec divers qualificatifs mais désigne intellectuellement le même concept.

## Revendications

1. Procédé de réalisation d'une pièce mécanique à partir d'une conception assistée par ordinateur du type comportant les phases de :
- décomposition préalable de la partie massive de la pièce en strates élémentaires,
- fabrication des strates élémentaires,
- reconstitution de la pièce dans son intégralité par superposition et assemblage des strates.
**caractérisé en ce que**
- on intègre, lors de la décomposition de la pièce, la décomposition, en chambres élémentaires (20), d'au moins un circuit de transport de fluide préalablement calculé suivant une décomposition liée à celle de la pièce,
- on réalise lesdites chambres élémentaires dans les strates élémentaires (7i) de la pièce, pendant l'étape de fabrication des strates,
- on reconstitue le circuit de transport de fluide dans son intégralité lors de la superposition et de l'assemblage des strates, à partir d'une succession de chambres élémentaires mises en communication de façon étanche et prévues dans une partie au moins des strates.

2. Procédé selon la revendication 1 **caractérisé en ce que** :
- on intègre en outre lors de la décomposition de la pièce, la décomposition d'un circuit supplémentaire d'isolation en chambres d'isolation élémentaires suivant une décomposition liée à celle de la pièce,
- on réalise lesdites chambres élémentaires d'isolation dans les strates élémentaires de la pièce, lors de l'étape de fabrication des strates,
- on reconstitue le circuit d'isolation lors de la superposition et de l'assemblage de l'ensemble des strates.

3. Pièce mécanique du type comportant une partie massive avec au moins un circuit de transport de fluide par exemple composé de canaux réalisés dans la partie massive et à une distance prédéterminée de la surface d'échange thermique, **caractérisé en ce que** le circuit est réalisé par un procédé selon les revendications1 à 2 et **en ce que** le circuit est reconstitué dans son entier lors de l'assemblage des strates, à partir d'une succession de chambres élémentaires mises en communication de façon étanche et prévues dans une partie au moins des strates concernées.

4. Pièce mécanique selon la revendication 3 **caractérisé en ce que** le circuit, après reconstitution, forme dans la partie massive de la pièce, un ensemble de canaux parallèles suivant ou copiant une surface à une distance prédéterminée de celle-ci.

5. Pièce mécanique selon la revendication 3 **caractérisée en ce que** le circuit, après reconstitution, forme dans la partie massive de la pièce, une chambre en forme de nappe.

6. Pièce mécanique selon l'une des revendications 3 à 5 **caractérisée en ce que** le circuit comporte des moyens de raccordement à un dispositif de régulation

7. Pièce mécanique selon l'une des revendications 3 à 5 **caractérisée en ce que** l'intérieur du circuit comporte une multiplicité d'ailettes (21) transversales assurant renfort mécanique et brassage du fluide.

8. Pièce mécanique selon l'une des revendications 3 à 7 **caractérisée en ce qu'**elle comporte en outre un circuit supplémentaire isolant également reconstitué dans son entier lors de l'assemblage des strates, à partir d'une succession de chambres élémentaires mises en communication étanche et prévues dans une partie au moins des strates.

9. Pièce mécanique selon la revendication 8 **caractérisée en ce que** le circuit isolant est composé d'une pluralité de canaux parallèles.

10. Pièce mécanique selon la revendication 8 **caractérisée en ce que** le circuit isolant forme une chambre en forme de nappe.

11. Pièce mécanique selon l'une des revendications 3 à 10 **caractérisée en ce que** la pièce comporte entre les strates une application de colle mécanique sur les zones s'étendant depuis les canaux jusqu'à l'extérieur du moule, et une application de colle à conductivité thermique prédéterminée sur les zones s'étendant depuis les circuits de refroidissement jusqu'à la surface de moulage.

12. Pièce mécanique selon l'une des revendications 3 à 11, **caractérisée en ce que** le circuit de transport de fluide est rempli d'un fluide choisi dans l'ensemble (fluide pour échange thermique, fluide pour isolation thermique, matériau liquide ou pulvérulent, fluide de marquage).

## Claims

1. Method of producing a mechanical part on the basis of a computer-aided design, of the type comprising:
- a preliminary step of breaking down the body of the part into elementary strata;
- manufacturing the elementary strata;
- reconstructing the part in its entirety by superposing and assembling the strata, **characterised in that**:
- the procedure incorporates, during the breaking down of the part, the breaking-down into elementary chambers (20) of at least one fluid transport circuit designed beforehand according to a break-down associated with that of the part;
- said elementary chambers are produced in the elementary strata (7i) of the part during the step of manufacturing the strata; and
- the fluid transport circuit is reconstructed in its entirety during the superposition and assembly of the strata from a succession of elementary chambers brought into communication in a fluidtight manner and provided in at least one part of the strata.

2. Method according to claim 1, **characterised in that**:
- the procedure also incorporates, during the breaking-down of the part, the breaking-down of an additional insulating circuit into elementary insulating chambers according to a break-down associated with that of the part;
- said elementary insulating chambers are produced in the elementary strata of the part during the step of manufacturing the strata;
- the insulating circuit is reconstructed during the superposition and assembly of the set of strata.

3. Mechanical part of the type comprising a body with at least one fluid transport circuit composed, for example, of channels produced in the body and at a predetermined distance from a heat exchange surface, **characterised in that** the circuit is produced by a method according to either of claims 1 or 2, and **in that** the circuit is reconstructed in its entirety during the assembly of the strata, based on a succession of elementary chambers that are brought into communication in a fluidtight manner and are provided in at least one portion of the strata in question.

4. Mechanical part according to claim 3, **characterised in that** the circuit, after reconstruction, forms in the body of the part a set of parallel channels following or copying a surface at a predetermined distance from the latter.

5. Mechanical part according to claim 3, **characterised in that** the circuit, after reconstruction, forms, in the body of the part, a chamber in the shape of a layer.

6. Mechanical part according to any one of claims 3 to 5, **characterised in that** the circuit includes means for connection to a regulating device.

7. Mechanical part according to any one of claims 3 to 5, **characterised in that** the interior of the circuit comprises a multiplicity of transverse fins (21) for mechanical reinforcement and for stirring the fluid.

8. Mechanical part according to any one of claims 3 to 7, **characterised in that** it also comprises an additional insulating circuit also reconstructed in its entirety during assembly of the strata, based on a succession of elementary chambers that are brought into communication in a fluidtight manner and are provided in at least one portion of the strata.

9. Mechanical part according to claim 8, **characterised in that** the insulating circuit is composed of a plurality of parallel channels.

10. Mechanical part according to claim 8, **characterised in that** the insulating circuit forms a chamber in the form of a layer.

11. Mechanical part according to any one of claims 3 to 10, **characterised in that** the part includes, between the strata, an application of mechanical adhesive on the areas extending from the channels as far as the outside of the mould, and an application of adhesive with predetermined thermal conductivity on the areas extending from the cooling circuits as far as the moulding surface.

12. Mechanical part according to any one of claims 3 to 11, **characterised in that** the fluid transport circuit is filled with a fluid chosen from a group comprising (heat exchange fluid, thermal insulation fluid, liquid or powdered material, marking fluid).

## Patentansprüche

1. Verfahren zur Herstellung eines Maschinenstücks ausgehend von einer computergestützten Konzeption des Typs mit den Phasen:
- vorangehende Zerlegung des massiven Teils des Stücks in Elementarschichten,
- Fertigung der Elementarschichten,
- Wiederherstellung des Stücks in seiner Gesamtheit durch Überlagerung und Zusammenbau der Schichten,
**dadurch gekennzeichnet, dass**
- während der Zerlegung des Stücks die Zerlegung in Elementarkammern (20) wenigstens eines zuvor berechneten Fluidtransportkreises in Folge einer Zerlegung integriert wird, die mit der des Stücks zusammenhängt,
- die Elementarkammern in den Elementarschichten (7i) des Stücks während des Schritts der Fertigung der Schichten gebildet werden,
- der Fluidtransportkreis in seiner Gesamtheit während der Überlagerung und des Zusammenbaus der Schichten aus einer Reihe von Elementarkammern wiederhergestellt wird, die auf dichte Art und Weise miteinander verbunden und in einem Teil wenigstens der Schichten angeordnet sind.

2. Verfahren nach Anspruch 1, **dadurch gekennzeichnet, dass**
- weiterhin während der Zerlegung des Stücks die Zerlegung eines zusätzlichen Isolationskreises in Elementarisolationskammern in Folge einer Zerlegung integriert wird, die mit der des Stücks zusammenhängt,
- die Elementarisolationskammern in den Elementarschichten des Stücks während des Schritts der Fertigung der Schichten gebildet werden,
- der Isolationskreis während der Überlagerung und des Zusammenbaus der Gesamtheit der Schichten wiederhergestellt wird.

3. Maschinenstück des Typs, der einen massiven Teil mit wenigstens einem Fluidtransportkreis aufweist, der beispielsweise aus Kanälen gebildet ist, die in dem massiven Teil und in einem vorbestimmten Abstand von der Wärmeaustauschfläche ausgebildet sind, **dadurch gekennzeichnet, dass** der Kreis durch ein Verfahren nach den Ansprüchen 1 bis 2 gebildet ist und dass der Kreis in seiner Gesamtheit während des Zusammenbaus der Schichten aus einer Reihe von Elementarkammern wiederhergestellt ist, die auf dichte Art und Weise miteinander verbunden und in einem Teil wenigstens der betroffenen Schichten angeordnet sind.

4. Maschinenstück nach Anspruch 3, **dadurch gekennzeichnet, dass** der Kreis nach der Wiederherstellung in dem massiven Teil des Stücks eine Gesamtheit von parallelen Kanälen bildet, die einer Oberfläche folgen oder diese nachbilden und zwar in einem vorbestimmten Abstand von dieser.

5. Maschinenstück nach Anspruch 3, **dadurch gekennzeichnet, dass** der Kreis nach der Wiederherstellung in dem massiven Teil des Stücks eine Kammer in Gestalt einer Schale bildet.

6. Maschinenstück nach einem der Ansprüche 3 bis 5, **dadurch gekennzeichnet, dass** der Kreis Mittel zur Verbindung mit einer Steuervorrichtung aufweist.

7. Maschinenstück nach einem der Ansprüche 3 bis 5, **dadurch gekennzeichnet, dass** das Innere des Kreises eine Anzahl von Querrippen (21) aufweist, die eine mechanische Verstärkung und eine Durchmischung des Fluids gewährleisten.

8. Maschinenstück nach einem der Ansprüche 3 bis 7, **dadurch gekennzeichnet, dass** es weiterhin einen zusätzlichen isolierenden Kreis aufweist, der ebenfalls in seiner Gesamtheit während des Zusammenbaus der Schichten aus einer Reihe von Elementarkammern wiederhergestellt ist, die auf dichte Art und Weise miteinander verbunden und in einem Teil wenigstens der Schichten angeordnet sind.

9. Maschinenstück nach Anspruch 8, **dadurch gekennzeichnet, dass** der isolierende Kreis aus einer Anzahl von parallelen Kanälen gebildet ist.

10. Maschinenstück nach Anspruch 8, **dadurch gekennzeichnet, dass** der isolierende Kreis eine Kammer in Gestalt einer Schale bildet.

11. Maschinenstück nach einem der Ansprüche 3 bis 10, **dadurch gekennzeichnet, dass** das Stück zwischen den Schichten einen mechanischem Kleber, der auf den Bereichen aufgetragen ist, die sich von den Kanälen bis zur Auβenseite der Form erstrecken, und einen Kleber mit einer vorbestimmten Wärmeleitfähigkeit aufweist, der auf den Bereichen aufgetragen ist, die sich von den Abkühlungskreisen bis zur Formungsoberfläche erstrecken.

12. Maschinenstück nach einem der Ansprüche 3 bis 11, **dadurch gekennzeichnet, dass** der Fluidtransportkreis mit einem Fluid gefüllt ist, das aus einer Gesamtheit ausgewählt ist (Fluid für den Wärmeaustausch, Fluid für die Wärmeisolation, flüssiges oder pulverförmiges Material, Fluid zur Markierung).
